Europäisches Patentamt

European Patent Office

Office européen des brevets

(19)

(11) Publication number: **0 209 081**
**A2**

## (12) EUROPEAN PATENT APPLICATION

(21) Application number: **86109405.0**

(22) Date of filing: **09.07.86**

(51) Int. Cl.⁴: **C04B 35/48**

(30) Priority: **16.07.85 US 755399**

(43) Date of publication of application:
**21.01.87 Bulletin 87/04**

(84) Designated Contracting States:
**DE FR GB IT**

(71) Applicant: **NORTON COMPANY**
**1 New Bond Street**
**Worcester Massachusetts 01606(US)**

(72) Inventor: **Knapp, Christopher E.**
**3915 Portage Road Apt. 202**
**Niagara Falls Ontario, L2J 4C8(CA)**

(74) Representative: **Baillie, Iain Cameron et al**
**c/o Ladas & Parry Isartorplatz 5**
**D-8000 München 2(DE)**

(54) **Sintered bodies of stabilized zirconia.**

(57) Stabilized sintered zirconia bodies are made by employing at least two zirconia powders made from rapidly quenched co-fusions of zirconia with a stabilizing metal oxide, one such powder having a sufficient content of stabilizer to produce a cubic zirconia in the product and the other having a lower stabilizer content to produce a tetragonal stabilization.

EP 0 209 081 A2

This invention relates to sintered zirconia bodies and powder sources for producing such bodies.

The stabilization of zirconia in the cubic phase at room temperature has been known for many years. More recently several articles and patents have appeared, describing a stabilized sintered product (PSZ) which contains both the cubic phase and the monoclinic phase or a metastable tetragonal phase, at room temperature. Also described in the literature are polycrystalline tetragonal zirconia bodies (TZP). The strongest reported material of this type has been described by Garvie in U.S. Patent 4,067,745. That patent discloses a sintered body of relatively coarse cubic crystals containing a precipitate of metastable very fine tetragonal crystals.

U.S. Patents 4,344,904 and 4,360,598 also disclose sintered partially stabilized zirconia sintered products.

According to the invention, there is provided a sintered body of stabilized zirconia made from at least two distinct powders of a rapidly quenched fusion of zirconia and stabilizing agent, one of said powders containing sufficient agent to result in a cubic zirconia in the final product and another having a smaller amount of agent to produce a tetragonal stabilized zirconia. Particularly desirable are products in which the tetragonal producing powder is present in an amount of 10 to 50% by weight. Of particular importance are those products which are oxygen ion conductive.

The invention applies the discovery that by use of stabilized zirconia powders made from zirconia which has been co-fused with a stabilizing oxide rapidly quenched and reduced to a powder, zirconia bodies may be produced having strength up to 3 times that of otherwise similar sintered zirconia bodies.

The most obvious structural characteristic is the size of the cubic zirconia particles in the product. The zirconia particles in the products of this invention are 5 to 10 micrometers but contain secondary grain boundaries within the particles bringing the effective particle size to a submicron value.

The zirconia powder used to prepare products in accordance with the present invention is made by producing a fusion of a mixture of zirconia and a stabilizing agent. The amount of stabilizing agent may be varied depending upon the result desired. The amount of stabilizing agent is governed by the region of the equilibrium phase diagram which has the desired phase field. Thus on sintering the composition to the 1350°C -1550°C. range it should be fully in the tetragonal or in the tetragonal and cubic phase region to realize the tetragonal or the tetragonal and cubic phases in the product. Upon normal cooling to room temperature the tetragonal phase is retained in a metastable condition. In the case of $Y_2O_3$ or stabilzing agents this is 1 to 10%; in the case of CaO it is 3.3 to 4.7%; and in the case of MgO it is 2.8 to 4% (all %'s by weight). Mixtures of 2 or more stabilizing agents may be used. Because of non-equilibrium effects such as particle size and rate of temperature change and perhaps others, the published equilibrium data is only a guide. We have found that 2.6% of $Y_2O_3$ is a minimum. The fused mixture is very rapidly solidified by quenching. A convenient quenching method is air quenching as disclosed in U.S. Patent 3,831,857, in which the molten refractory is blown through a nozzle with pressurized air, to form hollow or solid spherical particles of solidified melt. Alternatively the melt may be solidified in thin layers on or between metal plates or spheres.

This rapid quenching operation is essential to retain the high temperature phases at room temperature and limit crystallite size.

The solidified melt, which ideally consists of tetragonal and cubic crystals with or without some smaller amount of monoclinic zirconia, is reduced, by conventional non-contaminating milling methods (such as vibratory wet milling, to a particle size of a few microns or less, and dried. Although such mechanical action can cause conversion of the tetragonal zirconia, subsequent heating during sintering causes reversion to tetragonal and retention upon cooling due to the effect of crystal size and secondly grain boundaries.

The thus produced dry powder is then milled to break up coarse agglomerates, cold pressed extruded, or otherwised shaped to form suitably shaped green bodies, fired to 1350 to 1550°C., and cooled to room temperature. One hour at temperature is sufficient to produce bodies of maximum strength, and no special cooling or annealing - schedule is required. The sintering temperature is determined by the temperature needed to achieve greater than 98% theoretical density and desired crystal structure.

A co-fusion of zirconia and yttria was made such that the air quenched product has an yttria content of 2.9 mole % (5.2 wt.%). The product was mechanically crushed to finer than about 100 micrometers and then ground in a vibratory (Sweco) mill in water for 28 hours to give a particle size distribution in which 90% of the particles were finer than 1.9 micrometers (as measured by a Coulter counter). The powder was dried in air at about 100°C., milled dry to break up clumps, and screened through a 325 mesh (having openings of about 49 micrometers). Discs, 2.54 cm in diameter and about 0.3 cm in thickness, were made from the dry powder by uniaxially pressing at 3000 psi. The discs were then fired, at atmospheric pressure in air to 1450°C for 3-1/2 hours and then held at 1450°C. for from I to 3-1/2 hours, and then allowed to cool. Results showed that maximum strength was developed within one hour.

If the silica in the fused material is considered too high, it may be reduced by leaching the powder in aqueous alkaline solution and then washing the powder. Acid leaching may also be employed.

In the above example, the highest strength achieved, in a three point bending test (using bar supports) was 290,000 psi for yttria stabilized zirconia made from a powder containing 0.18% silica and 6% yttria. Examination of weaker discs showed mechanical imperfections due to inhomogeneous packing in the pressing operation.

Examination of the pellets showed the main crystalline phases to be tetragonal particles averaging 10 micrometers or less in diameter, the particles contained secondary grain boundaries dividing them into several smaller particles.

Surface grinding of partially stabilized zirconia has been reported to improve the strength of the material by conversion of the tetragonal crystals to monoclinic. Such conversion places the ground surface in compression. This effect was confirmed in discs prepared according to the above procedure, with the highest strengths being achieved on discs in which the surface tensional in the bending test was the ground surface.

Similar, high strength bodies were made from lime stabilized zirconia. MgO may also be employed as well as other rare earth oxides.

The zirconia products of the present invention have utility as machine parts, extrusion dies, and other uses where high strength, refractory parts of high fracture toughness and resistance to thermal shock are required.

Powders and bodies of zirconia according to the present invention may be used to make wear resistant strong parts for mechanical and thermal resistance and may be used to make tubes for oxygen sensing or other devices utilizing the oxygen ion conductivity of the zirconia.

Since the cubic phase is believed necessary in the production of oxygen sensors or other devices (e.g. fuel cells making use of oxygen ion conductivity), particularly desirable material for such uses is the composite according to the present invention made from tetragonal and cubic type powders. Of particular utility was found to be a 50/50 percent by weight combination of a 4% yttria stabilized powder with an 8% yttria stabilized powder. The ratio of the two ingredients is not believed to be critical, the essence of the concept being the strengthening of the desired cubic phase material with sufficient tetragonal for strength improvement and reduction of grain size. Such tetragonal producing powder should contain 8% or less yttria by weight. The cubic powder may be from 8 to 14%, the particular amounts of yttria in the two powders being dictated by the need to produce the desired phases in the pressed and fired product under the processing conditions used.

While other stabilizing agents may be used, yttria is preferred for products according to the present invention, in particular for oxygen ion conductive material.

In specific tests it was found that an 8% mainly cubic stabilized zirconia oxygen ion conducting bar product from a fused-quenched powder had an average bending strength of 125,000 psi, while a bar made from a 50-50 weight percent mix of a 4% powder and an 8% powder according to the present invention had a bending strength of 209,000 psi. Both products had suitable ion conductivity. Similarly a 14% yttria powder resulted in a strength of less than 125,000 psi, while a 50-50 blend of 4% yttria powder and 14% yttria powder according to the present invention resulted in a strength of 141,000 psi, together with suitable electrical properties. The mixed powder products also had superior thermal shock properties up to a 500°C. temperature difference.

## Claims

1. A sintered body of stabilized zirconia made from at least two distinct powders of a rapidly quenched fusion of zirconia and stabilizing agent, one of said powders containing sufficient agent to result in a cubic zirconia in the final product and another having a smaller amount of agent to produce a tetragonal stabilized zirconia.

2. A body according to claim 1, in which the stabilizing agent is yttria.

3. A body according to claim I or 2, in which the tetragonal producing powder is present in an amount of 10 to 50% by weight.

4. A body according to any one of the preceding claims, in which one powder contains 8% yttria and the other contains 4% yttria.

5. A body according to any one of the preceding claims, which is oxygen ion conductive.